# EUROPEAN PATENT SPECIFICATION

(11) **EP 3 996 874 B1**
(45) Date of publication and mention of the grant of the patent: **06.09.2023**
(21) Application number: 20746518.8
(22) Date of filing: 09.07.2020
(51) Int. Cl.: B25B 5/10, B25B 5/16

(54) **LOCKING ASSEMBLY**
SPERRANORDNUNG
ENSEMBLE DE VERROUILLAGE

(30) Priority: 09.07.2019 US 201962871764 P
(43) Date of publication of application: 18.05.2022
(60) Divisional application: 23185750.9
(73) Proprietor: Techlok Solutions, LLC, Royal Oak, MI 48073 (US)
(72) Inventor: ANGOTT, Ryan, J., Royal Oak, MI 48073 (US); ANGOTT, Paul, G., Bloomfield Hills, MI 48304 (US); LATCHA, Michael, A., Redford, MI 48239 (US)
(74) Representative: Becker, Eberhard
(86) International application number: PCT/US2020/041374
(87) International publication number: WO 2021/007415

(56) References cited:
- FR-A1- 2 674 563
- US-A1- 2018 347 237

## Description

### CROSS-REFERENCE TO RELATED APPLICATION

This U.S. patent application claims priority to and the benefit of U.S. non-provisional no. 16/24,448, filed July 9, 2020 and U.S. provisional application no. 62/871,764 filed on July 9, 2019.

### BACKGROUND OF THE INVENTION

### 1. Field of the Invention

The present invention relates to a locking assembly. More particularly, the present invention relates to a locking assembly for securing an unsupervised portable electronic device or other personal belongings to a work surface.

### 2. Related Art

This section provides background information related to the present disclosure which is not necessarily prior art.

Since the introduction of the internet age, more opportunities have become available for persons to work remotely. With this availability, it has become a common practice to take and use portable electronic devices, such as laptops, in public places. For example, users of these portable electronic devices frequent coffee shops, airports, and bookstores as quiet public locations in which they can focus on work and/or other usages of their portable electronic devices. Once situated, however, it can be difficult for the user to use a restroom or purchase refreshments without leaving their portable electronic device unattended and vulnerable to theft. In fact, occurrences of theft have become so common that many shops and stores have started displaying signs warning clientele not to leave their portable electronic devices unattended.

In response to the rampant theft of unsupervised portable electronic devices, locking devices have been developed to allow the user to lock their portable electronic device during periods without supervision. These prior art locking devices are typically designed to lock a portable electronic device to a table or other work surface for deterring and reducing theft. However, despite some success, the prior art locking devices still exhibit common shortcomings. For example, prior art locking devices have struggled to provide a "one-size-fits-all" solution. More specifically, the prior art locking devices can only be used with portable electronic devices and work surfaces having very specific dimensions and configurations, and deviation from these dimensions and configurations result in damage to a work surface when trying to lock a non-compliant portable electronic device. In addition, prior art locking devices oftentimes employ rigid clamping mechanisms that are both cumbersome and relatively easy to compromise with simple tools or by simply repeated wiggling and pulling on the clamping mechanism. Other prior art locking devices use variations of locking ports (such as Kensington ports), which are integrated in some older generations of laptops but are also relatively easy to circumvent.

Accordingly, there is a continuing need to develop and further refine locking devices that are compatible with a variety of portable electronic devices and are less prone to being circumvented. Prior art can be found in FR2674563A1 and US2018/347237A1 which discloses the preamble of claim 1.

### SUMMARY OF THE INVENTION

This section provides a general summary of the disclosure and is not to be interpreted as a complete and comprehensive listing of all of the objects, aspects, features and advantages associated with the present disclosure.

The invention is as defined in claim 1.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1 is a perspective view of a locking assembly for locking a portable electronic device to a work surface according to a first embodiment of the invention;
Figure 2 is another perspective view of the locking assembly illustrating more than one portable electronic device being secured thereto;
Figure 3 is a side view of a locking mechanism of the locking assembly disposed in an open position to allow the portable electronic device can be removed therefrom;
Figure 4 is an internal view of the locking mechanism illustrating components that move a bolt between a locked and an unlocked position;
Figure 5 is an exploded perspective view of the locking mechanism illustrating electronic components that facilitate moving the bolt between the locked and the unlocked positions;
Figure 6 is a schematic view of a lock assembly circuit that permits operation of the electronic components of the locking mechanism;
Figure 7A is bottom view of an example implementation of an alarm system for the locking assembly including a circuit loop that becomes broken upon movement of the portable electronic device;
Figure 7B is a side view of the alarm system illustrated in Figure 7A;
Figure 8 is another example implementation of an alarm system for the locking assembly including a potentiometer that senses movement of the portable electronic device;
Figure 9 is yet another implementation of an alarm system for the locking assembly including a potentiometer that senses pivotal movement of the portable electronic device;
Figure 10 is another implementation of an alarm system for the locking assembly including a rotary-type detector that senses movement of the portable electronic device;
Figure 11 is a second embodiment of the locking assembly including a first upper pad and a pair of second lower pads that are provided to clamp on either side of the work surface;
Figure 12 is a third embodiment of the locking assembly including a connection key for direct connection to the portable electronic device;
Figure 13A is a front view of a fourth embodiment of the locking assembly including a plurality of adjustable clamps;
Figure 13B is a bottom view of the fourth embodiment of the locking assembly;
Figure 14 is a fifth embodiment of the locking assembly including a corner clamp for connection to the portable electronic device;
Figure 15A is a side view of a sixth embodiment of the locking assembly including a connection panel assembly for connection to the portable electronic device;
Figure 15B is a bottom view of the sixth embodiment of the locking assembly;
Figure 16 is a seventh embodiment of the locking assembly including a motorized elongated bar for driving a clamp assembly between a clamped and an unclamped position;
Figure 17 is an eighth embodiment of the locking assembly including a manual lock housing for manually moving the bolt between the unlocked and locked positions; and
Figure 18 is a ninth embodiment of the locking assembly including a pair of pins for holding a cable that can attach additional personal belongings to the locking assembly.

### DESCRIPTION OF THE ENABLING EMBODIMENTS

Example embodiments will now be described more fully with reference to the accompanying drawings. In general, the subject embodiments are directed to a locking assembly for securing portable electronic devices to a work surface. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the locking assembly is intended to provide a design that is hard to circumvent and is also compatible with a variety of portable electronic devices.

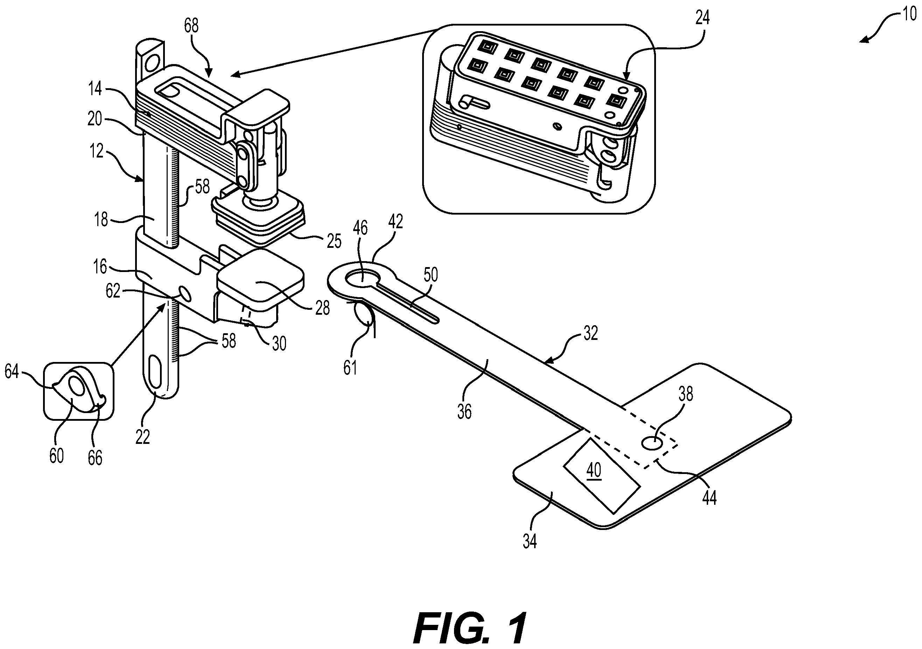

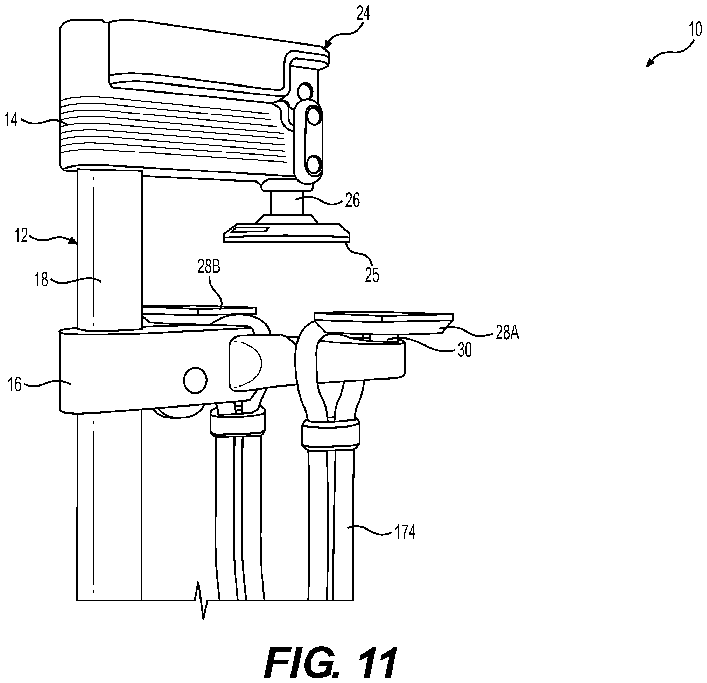

A locking assembly 10 in accordance with a first embodiment is generally shown in Figures 1-6. The locking assembly 10 comprises a clamp assembly 12 that includes a first jaw 14 and a second jaw 16 moveable towards one another along an elongated bar 18 that extends axially between a first end 20 and a second end 22. In the illustrated embodiment, the first jaw 14 is stationary on the first end 20 of the elongated bar 18 and the second jaw 16 is movable along the elongated bar 18 between the second end 22 and a location in close proximity to the first jaw 14. However, the second jaw 16 could be stationary, while the first jaw 14 is movable along the elongated bar 18, without departing from the subject disclosure. The first jaw 14 extends from the elongated bar 18 to a first pad 25 disposed in a facing relationship with the second jaw 16. The first pad 25 connects to the first jaw 14 via a first pin 26 (as best illustrated in Figure 11) that allows the first pad 25 to pivot relative to the first jaw 14. For example, the first pin 26 may allow pivotable or rotational movement between the first pad 25 and the first pin 26 with respect to at least one axis so that the first pad 25 remain parallel with the work surface if the locking assembly 10 is rocked back and forth. Alternatively, the first pin 26 may include a ball-type connection (not shown) allowing pivotable movement between the first pad 25 and the first pin 26 with respect to a plurality of axes. Similarly, the second jaw 16 extends from the elongated bar 18 to a second pad 28 disposed in a facing relationship to the first jaw 14. The second pad 28 connects to the second jaw 16 via a second pin 30 that allows the second pad 28 to move relative to the second jaw 16. The second pin 30 may be parallel to the first pin 26. For example, the second pin 30 may allow pivotable or rotational movement between the second pad 28 and the second pin 30 with respect to at least one axis so that the pads 25, 28 remain parallel with the work surface if the locking assembly 10 is rocked back and forth. It has been shown that maintaining the pads 25, 28 in a parallel position to the work surface can results in gripping forces of up to ten times as strong as non-parallel. The pads 25, 28 are preferable formed of rubber or other elastic materials that have a high friction index. In addition, the second pin 30 may include a ball-type connection (not shown) allowing pivotable movement between the second pad 28 and the second pin 30 with respect to a plurality of axes. In use, the first jaw 14 and second jaw 16 move relative to one another along the elongated bar 18 on opposite sides of a work surface, such as a table, a counter, or the like. As will be described in greater detail below, a locking mechanism 24 locks the first jaw 14 relative to the second jaw 16 once the pads 25, 28 have been positioned on and clamped to opposite sides of the work surface. The pads 25, 28 may be further configured to rotate with respect to the associated jaw 14, 16. For example, the first pin 26 and the second pin 30 illustrated in Figure 11 may be rotatable relative to the associated jaw 14, 16 and also pivotally connected to the pads 25, 28 along the at least one axis that may be perpendicular or parallel to the pins 26, 30. The pivotal and rotational movement of the pads 25, 28 result in a nullification of the leverage by a potential thief when wiggling and prying at the locking assembly 10 as the pads 25, 28 remain relatively stationary and flush during torqueing of the elongated bar 18 and/or jaws 14, 16.

With continued reference to Figure 1, the locking assembly 10 further includes a connector 32 for connecting the clamp assembly 12 to the portable electronic device. More particularly, the connector 32 extends from a first connector end 42 pivotally connected to the clamp assembly 12 to a second connector end 44 for connection with the portable electronic device. In the preferred arrangement, the second connector end 44 establishes a pivotable connection with the portable electronic device (i.e., it is pivotably connected), to allow for a greater degree of freedom of the portable device about the work surface once the locking assembly 10 is secured thereto. However, other means of connecting the second connector end 44 to the portable electronic device could also be utilized without departing from the subject disclosure, some of which are described in more detail below.

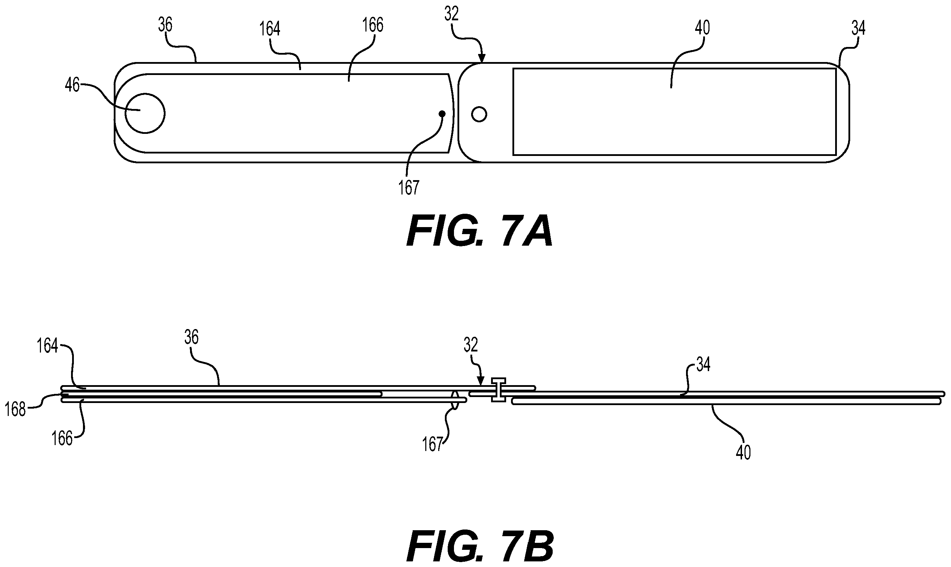

For example, in the first embodiment, the connector 32 includes a connection plate 34 disposed adjacent the second connector end 44 and a connection strip 36 extending between the clamp assembly 12 from the first connector end 42 to the second connector end 44. The connection plate 34 is intended to be connected to the portable electronic device and the connection strip 36 is intended to be connected to the clamp assembly 12. The connection plate 34 and connection strip 36 may be integral or otherwise connected. The connection plate 34 and the connection strip 36 are preferably comprised of steel or other strong, semi-rigid materials. The connection strip 36 has a flat shape so that it is more rigid to deformation in certain directions, such as the directions in which it can pivot. In the illustrated embodiment, the connection plate 34 includes a pivot connector 38, such as a rivet, that pivotally connects a center of the connection plate 34 to the connection strip 36. The pivot connector 38 on the center of the connect plate 34 makes it more difficult to peel the connection plate 34 off of the connection strip 36 than if the pivot connector 38 was off center. The pivot connector 38 thus provides additional nullification to leveraging by a potential thief when wiggling and prying at the portable electronic device. The connection plate 34 may further include a portable electronic device connector 40, such as an adhesive, double-sided tape, and/or additional components. In instances with adhesive or double-sided tape, the device connector 40 may include a layer of tape primer on the surface of the portable electronic device (for example a 3M Primer 94). Research has shown that in scenarios wherein the connection plate 34 is steel and the laptop is plastic, utilizing primer on the laptop results the laptop being harder to peel off by over ten times than those without primer. The layer of primer between the portable electronic device and the adhesive or double-sided tape significantly increases the bond strength. For example, In use, the portable electronic device is connected to the connection plate 34, the connection plate 34 connects to the connection strip 36, and the connection strip 36 connects to the clamp assembly 12. The first connector end 42 includes a first bore 46 for connection to the clamp assembly 12 and the second connector end 44 includes a second bore 48 (Figure 7) for connection to the pivot connector 38, e.g., the rivet, that extends along an axis. The connection strip 36 and/or the connection plate 34 may be formed of steel and/or steel alloys.

According to the first embodiment, the locking mechanism 24 locks the connection strip 36 to the first jaw 14 and only permits removal upon unlocking of the locking mechanism 24, e.g., via entry of a password or use of a key. More particularly, when the locking mechanism 24 is locked, a portion of the locking mechanism 24 extends through the first bore 46 and the first bore is large enough to permit the connector strip 36 to pivot thereabout to form a first pivot connector about a first axis. The connector 36 extends from the locking mechanism 24 to the rivet 38 to form a second pivot connector about a second axis that is parallel to the first. When the locking mechanism 24 is unlocked, it no longer extends through the bore 50 and the connection strip 36 can be removed. The pair of pivot connectors thus nullify misalignment of the pads 25, 28 that may be caused during an attempted theft.

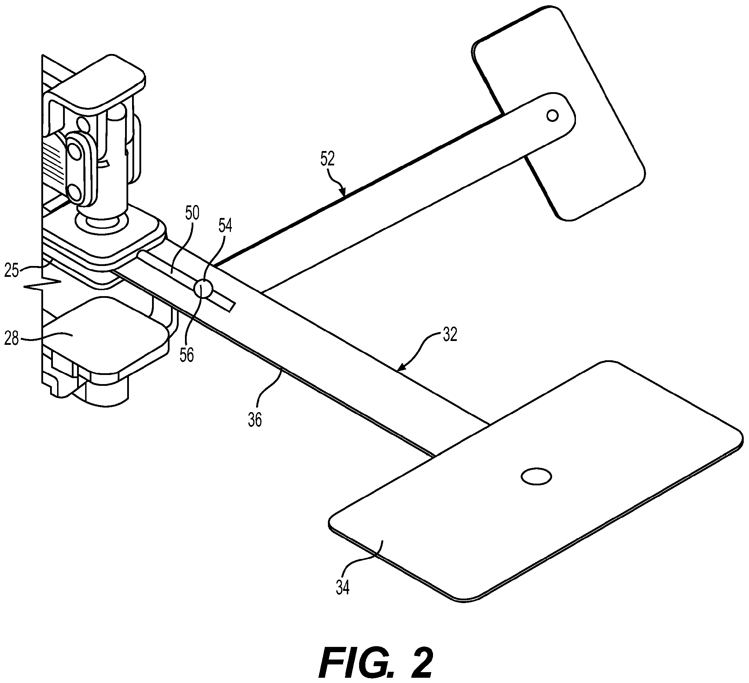

With reference now to Figure 2, the first bore 46 of the connection strip 36 (as best shown in Figure 1) includes a slot 50 extending therefrom that allows for the connection of at least one add-on connector 52. More particularly, the add-on connector 52 can be primarily the same as connection strips 36 except that the first bore 46 is replaced with a connection pin 54 that extends to a flange 56. In use, the flange 56 is placed through the first bore 46 and the connection pin 54 is slid into the slot 50 such that it cannot be removed unless it is returned to the first bore 46. As will be appreciated in view of the continued description below, when the connector 32 is connected to the clamp assembly 12 and the clamp assembly 12 is clamped around the work surface, the first bore 46 becomes inaccessible such that the add-on connector 52 in the slot 50 cannot be removed.

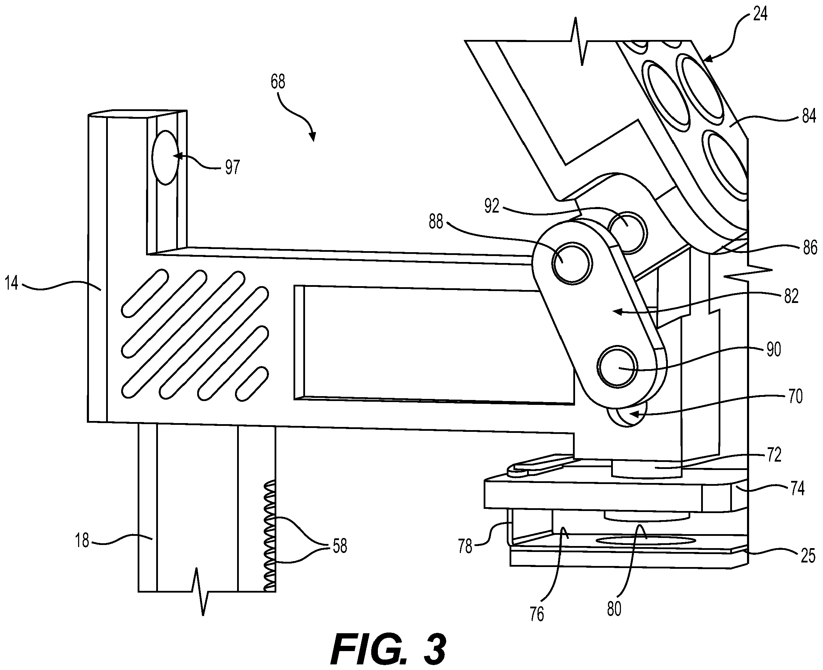

As best illustrated in Figure 1 and 3, in one arrangement, the elongated bar 18 may include a plurality of teeth 58 along an edge thereof. Each of the teeth 58 may be triangularly shaped and extend at opposite angles from the edge, for example 45°, such that adjacent teeth form 90° angles with one another. The second jaw 16 includes a cog 60 pivotally connected thereto via a pin 62. The cog 60 includes a detent 64 and a release trigger 66. As such, as the second jaw 16 is moved towards the first jaw 14, the detent 64 interfaces with the plurality of teeth 58, causing the cog 60 to pivot. However, the detent 64 cannot freely move along the teeth 58 as the second jaw 16 is moved away from the first jaw 14 so that it becomes locked unless the release trigger 66 is actuated to pivot the detent 64 away from the plurality of teeth 58. The cog 60 may be biased towards the plurality of teeth 58 by a torsion spring 61. When the first jaw 14 and second jaw 16 are clamped on either side of the work surface, pressure on the second jaw 16 may prevent use of the release trigger 66. Use of the release trigger 66 can become available again upon de-clamping via movement of the locking mechanism 24, which will be described in greater detail below. However, it should be appreciated that other methods of locking the first jaw 14 and the second jaw 16 may be adopted including methods that do not necessarily require teeth and instead rely on locking levers or screws as is known in the art.

With continued reference to the first embodiment, certain components of the locking mechanism 24 are best illustrated in Figure 3. The first jaw 14 defines a seat 68, having a u-shape, for placing the locking mechanism 24. The first jaw 14 further defines a cavity 70 for placement of a locking rod 72 that is moveable with respect to the first pad 25. The locking rod 72 may extend along an axis that is parallel to the axis of the rivet 38. The locking rod 72 is connected to and extends at least partially through a back plate 74 that is generally parallel and adjacent to a top surface 76 of the first pad 25, the top surface 76 facing opposite the second pad 28. Instead of a first pin 26, a bracket 78 connects the first pad 25 to the first jaw 14 and allows some pivotal movement of the first pad 25 with respect to the first jaw 14. The top surface 76 defines a depression 80 that is sized to at least partially receive the locking rod 72. In operation, actuation of the locking mechanism 24 causes the back plate 74 to move into and out of contact with the top surface 76 of the first pad 25 and the locking rod 72 to move into and out of the depression 80. Before the locking rod 72 enters the depression 80, the first bore 46 of the connection strip 36 can be aligned therewith so that the locking rod 72 extends through the first bore 46 before being locked against the top surface 76 and into the depression 80 to form another pivot connector parallel to the first. As such, the connector strip 36 become pivotally connected to the first jaw 14 and the locking mechanism 24.

With continued reference to Figure 3, the locking mechanism 24 includes a linkage 82 that pivotally connects the locking mechanism 24 to the first jaw 14. More particularly, the locking mechanism 24 includes a lock housing 84 and a carriage 86, wherein the carriage 86 is connected to both the linkage 82 and the lock housing 84. The linkage 82 includes a first pivot connection 88 connected to the carriage 86 and a second pivot connection 90 connected to the locking rod 72, while the carriage 86 includes a lock pivot 92 that pivotally connects the carriage 86 to the first jaw 14. The linkage 82 allows the carriage 86 and lock housing 84 to move or pivot between a locked position and an unlocked position. In the locked position, the carriage 86 and at least part of the lock housing 84 are located within the seat 68 of the first jaw 14 and the locking rod 72 is pushed into contact with the first pad 25 via operation of the linkage 82. In the open position, the carriage 86 is pivoted away from the first jaw 14 with respect to the lock pivot 92, causing the linkage 82, which is located closer to the elongated bar 18, to be pulled upwardly by the first pivot connection 88 and to carry or drag the locking rod 72 by the second pivot connection 90. Movement of the carriage 86 results in movement of the first jaw 14 or the second jaw 16 into forceful contact with the work surface. Movement of the carriage 86 results in a leveraged lesser movement (which may be bending or flexing) of the first jaw 14 or second jaw 16 by a ratio of approximately 40:1. As such, the leveraged movement results in a tighter clamping force that can quickly be established.

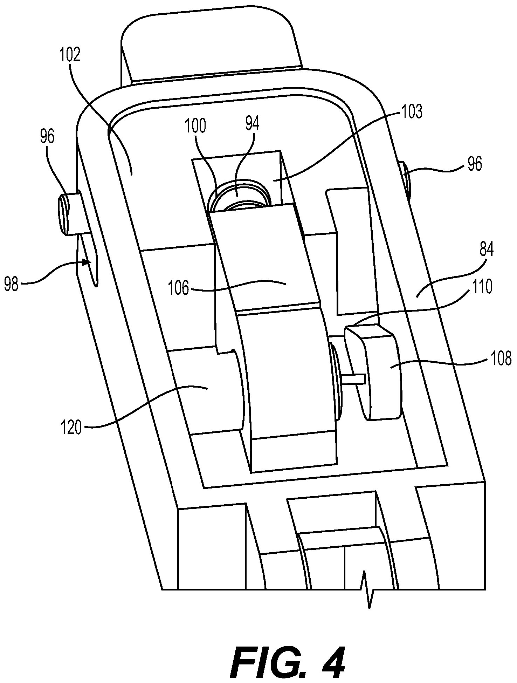

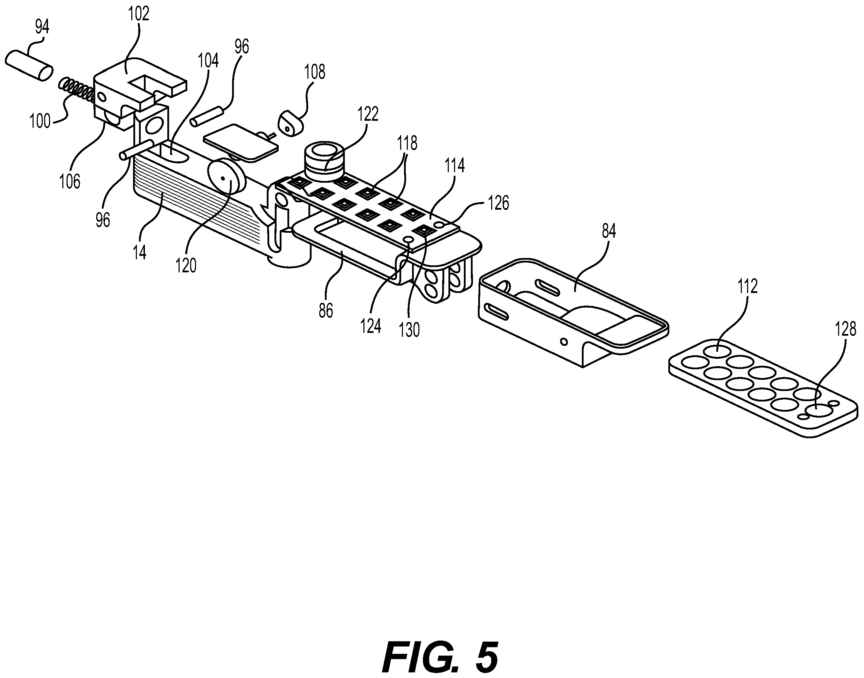

With reference now to Figure 4, a disassembled view of the lock housing 84 is illustrated. The lock housing 84 contains a deadbolt arrangement that includes a bolt 94 that is located near the elongated bar 18 and is permitted to slide out of and retract into the lock housing 84. The first jaw 14 further includes a bolt port 97 (Figure 3) along the seat 68 and aligned to receive the bolt 94 in a locked position, preventing pivotal movement of the lock mechanism 24 and the corresponding release of the locking rod 72. A pair of carrier pins 96 are located on opposite sides of the bolt 94 and extend through carrier slots 98 in the lock housing 84. In use, the carrier pins 96 can be manually slid along the carrier slots 98 to move the bolt 94 into and out of engagement with the bolt port 97. A spring 100 biases the bolt 94 in the locked position. Movement of the bolt 94 is guided by a guide block 102 that houses at least a portion of the bolt 94 and the pair of carrier pins 96. The first jaw 14 further includes a guide opening 104 (Figure 5) for placement of the track block 106 that can be located therein. The guide block 102 includes a groove 103 that interfaces with the track block 106 and limits movement of the guide block 102 to only or substantially only axial movement. A lock tab 108 is pivotally connected to the lock housing 84 and is located near the guide block 102 and includes a lock surface 110. During operation, the lock tab 108 can be rotated such that the lock surface 110 blocks the return of the bolt 94 in a contact position, such that the bolt 94 is maintained in the locked position and cannot be retracted manually. The lock tab 108 can further be rotated to a non-contact position that permits the bolt 94 to be retracted. Rotational movement of the lock tab 108 can be effectuated by any number of means, however, in the illustrated embodiment it is effectuated by a motor 120.

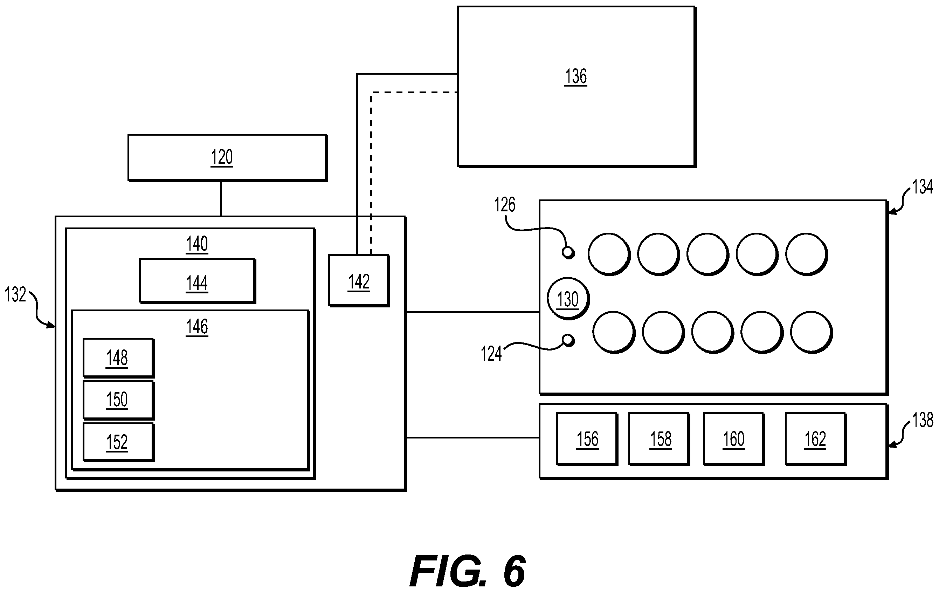

With reference now to Figure 5, the lock mechanism 24 includes a user interface such as a keypad 112 with a plurality of keys that cover an upper portion of the lock housing 84. A printed circuit board (PCB) 114 is located beneath the keypad 112 and includes a lock assembly circuit 116 (Figure 6) that will be described in greater detailed below, and which includes a plurality of switches 118 corresponding to the keys. The motor 120 is connected to the lock assembly circuit 116 and causes the lock tab 108 to pivot the locking surface 110 into and out of engagement with the guide block 102. One or more batteries 122 are located within the lock housing 94 and provide power to the lock assembly circuit 116 and the motor 120. The lock assembly circuit 116 may further include one or more lights, such as LEDs, to indicate the status of the lock tab 108 and/or bolt 94. For example, a green light 124 to indicate that the lock surface 110 of the lock tab 108 is not engaged with the guide block 102 and thus is free to retract. A red light 126 may also be included to indicate engagement of the lock tab 108, thus requiring a password input with the key pad 112. In addition to the plurality of keys, the keypad 112 may also include a lock/unlock button 128 and the lock assembly circuit 116 may further include a lock/unlock switch 130, such that the lock/unlock button 128 needs to be pressed before or after inputting the password to effectuate movement of the lock tab 108.

The lock assembly circuit 116 is schematically illustrated in Figure 6 in accordance with one aspect of the disclosure. The various elements provided therein allow for a specific implementation. Thus, one of ordinary skill in the art of electronics and circuits may substitute various components to achieve a similar functionality. The lock assembly circuit 116 includes a General Computing Unit "GCU" system 132, a first user interface system 134 (corresponding to the keypad 112), a second user interface system 136, and an alarm circuit 138.

In accordance with one aspect, certain operations of the lock assembly circuit 116 can be controlled via communication between the first user interface 134 and the GCU system 132. The GCU system 132 includes a controller 140 and a communications module 142. The controller 140 includes a processor 144 and a memory 146 having machine readable non-transitory storage. Programs and/or software 148 (such as Arduino IDE, Windows, Linux, Android, iOS) may be saved on the memory 146 and so is an input data 1 50 obtained via the first user interface 134 and/or the second user interface system 136. Profile data 152 related to saved user preferences, such as passwords (password data) are also saved on the memory 146. The processor 144 translates and carries out instructions based on the software 148, input data 150, and profile data 152 and causes the motor 120 to move the lock tab 108 between positions.

The communications module 142 may provide a wireless connection (such as Wi-Fi or Bluetooth) from the GCU system 132 to the second user interface system 136, which may include a portable electronic device. For example, the communications module 142 may pair to a laptop and/or cellphone being secured to the locking mechanism 24. As such, while a laptop is left unattended, the processor may cause a notification to be sent to the cellphone in the event of movement, unlocking, and/or breaking. The alarm circuit 138 is configured to provide an auditory or other sensory alarm in the event of movement, unlocking, and/or breaking of the locking assembly 10. The alarm circuit 138 may include a piezo-type buzzer 156 (sensory alarm) for providing an auditory alert, a potentiometer 158, an accelerometer 160, and/or other movement detectors 162.

One example implementation of the alarm circuit 138 is shown in Figures 7A and 7B, in which the connection strip 36 includes a first conductive layer 164 spaced from a second conductive layer 166 by an insulator 168 (as best illustrated in Figure 7B). A contact 167 extends from the first conductive layer 164 and contacts the second conductive layer 164 to complete a circuit loop. The first conductive layer 164 is pivotally connected to the connection plate 34 and the second conductive layer 166 is spaced from the pivot connection. As such, when the connection strip 36 flexes up or down or is twisted along its length, the contact 167 becomes spaced from the first conductive layer 164, cutting the circuit loop, and the alarm circuit 138 is caused to initiate the alarm.

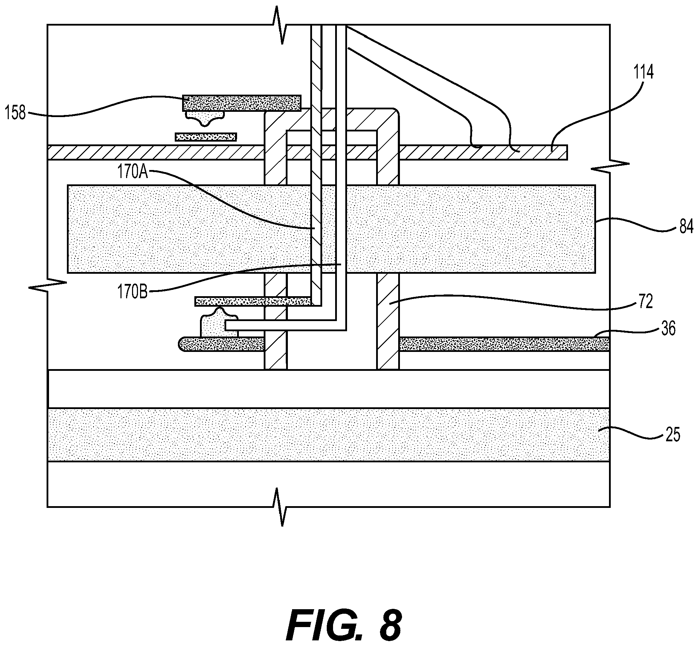

Another example implementation of the alarm circuit 138 is shown in Figure 8, in which the potentiometer 158 is located within the lock housing 84 and includes a pair of electrical contacts 170 that contact one another on the connection strip 36. For example, the pair of electrical contacts 170 may include a first contact (170A) that extends from the alarm circuit 138 and is fixed to the connection strip 36 and a second contact (170B) that extends from the potentiometer 158 and electrically connects to the first contact when the connection strip 36 is in specific positions. As such, as the connection strip 36 is moved, the electric connection between the pair of electrical contacts 170 is broken, initiating the alarm circuit 138.

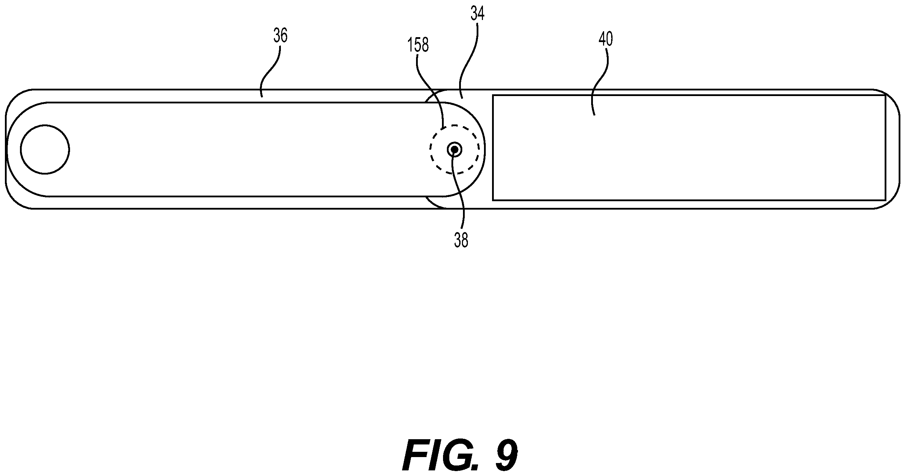

Another example implementation of the alarm circuit 138 is shown in Figure 9, in which wherein the potentiometer 158 is located on or near the rivet 38 that pivotally connects the connection plate 34 to the connection strip 36. As such, a predetermined amount of rotation or pivoting of the connection plate 34 with respect to the connection strip 36 initiates the alarm circuit 138.

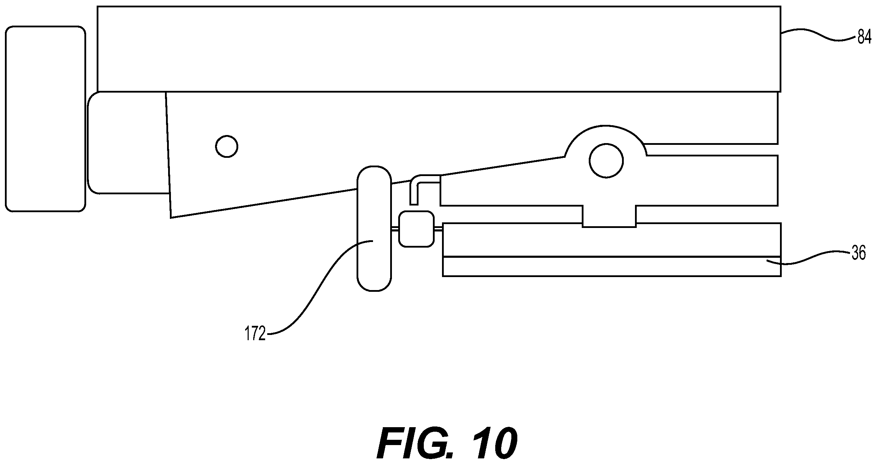

Yet another implementation of the alarm circuit 138 is illustrated in Figure 10, in which the movement detector 162 includes a rotary-type detector 172 that contacts a center of the connection strip 36 and/or connected work surface and signals to the alarm circuit 138 after a predetermined distance of rotation.

The implementations of the alarm circuit illustrated 138 in Figures 7 through 10 are provided for the purpose of example and are not meant to be limiting. Each of the implementations may be used together or separate. In addition, it should be appreciated that the initiation of the alarm circuit 138 may be caused by certain instructions saved in memory 146 and executed by processor 144. For example, the instructions saved in memory 146 may only allow the processor to cause the alarm circuit 138 to initiate once the password has been entered and the locking assembly 10 is in the locked position. Moreover, any predetermined distances or threshold values may be saved on memory 146. It should also be appreciated that the input data 150 obtained via the first user interface 134 and/or the second user interface system 136 may allow a user to alter predetermined thresholds and/or which of the various alarm implementations in Figures 7 through 10 are to be turned on or off.

With reference now to Figure 11, a second embodiment of the locking assembly 10 is illustrated and may include all of the features provided in the first embodiment. However, the second embodiment of the locking assembly 10 further includes a pair of second pads 28A, 28B (instead of just a single second pad 28, as in the first embodiment) and a cable 174, that is metal or otherwise reinforced, to loop around each of the second pads 28A, 28B. Other belongings, such as a purse, can thus be secured to the cable 174 (i.e., the cable 174 can be passed through handles of the purse) before connection to the second pads 28A, 28B and clamping to the work surface.

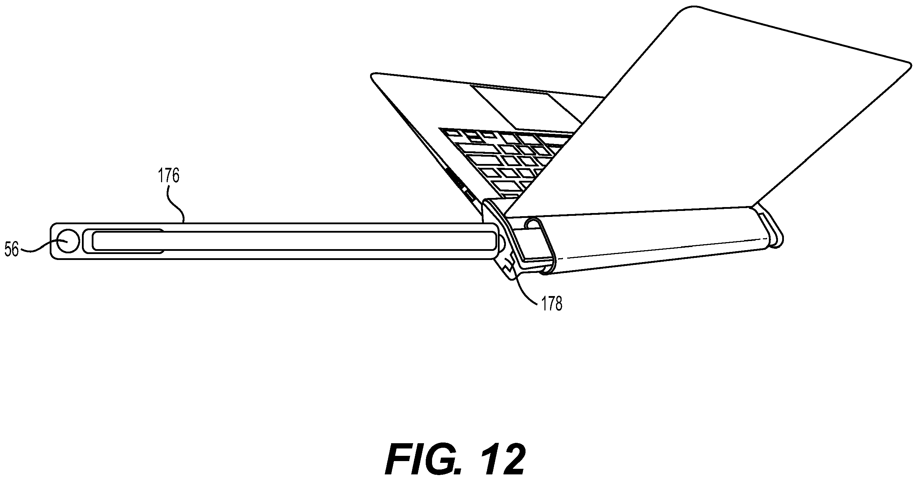

With reference now to Figure 12, a third embodiment of the locking assembly 10 is illustrated and which may include all of the features provided in the first and second embodiments. However, the third embodiment further includes a modified connection plate, i.e., a connection key 176, that may be used in conjunction with or independently of the previously described connection strip 36. The portable electronic device includes a keyway 178, such as a Kensington slot, and the connection key 176 can be locked therein. The connection key 176 may be a cable or metal strip and include one of the previously described connection pins 54 to be located in the slot 50 of the connection strip 36. Alternatively, the connection key 1 76 may include the previously described pivot connector 38, e.g., rivet, for permanent connection to the connection strip 36. Removal of the connection key 176 may be via an electronic lock, mechanical lock, or other mechanisms as described herein.

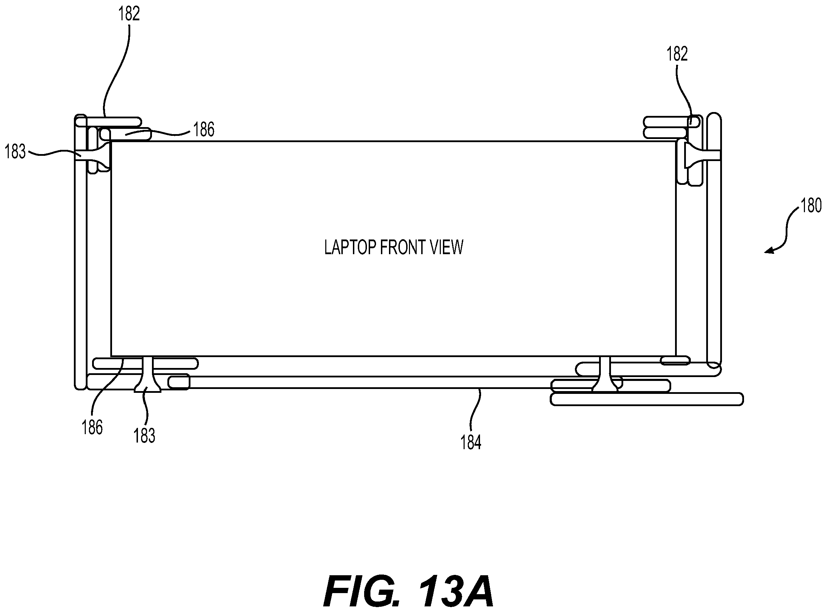

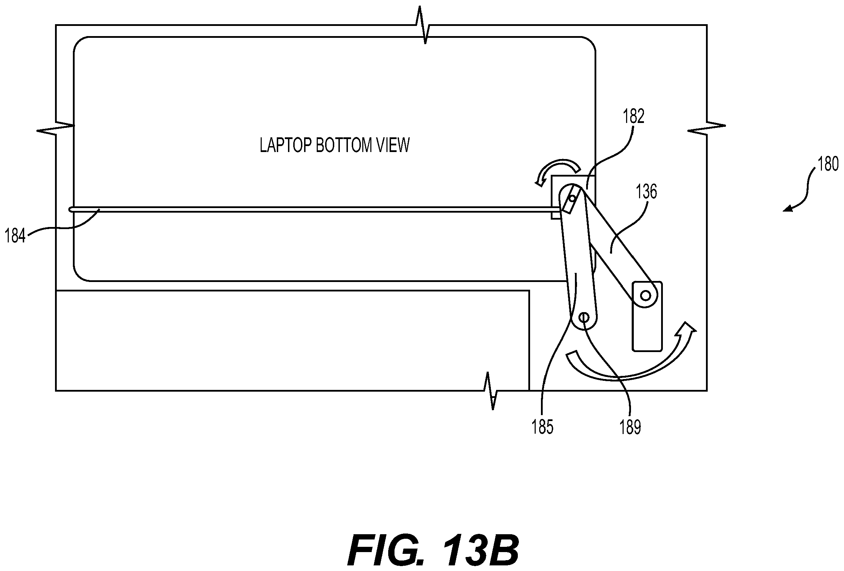

Figures 13A and 13B illustrates a fourth embodiment of the locking assembly 10 which may include all of the features provided in the previous embodiments. However, the fourth embodiment further includes a modified connection plate, i.e., a connection bracket 180, which includes a plurality of adjustable clamps 182 connected to one another via a band 184. In operation, the adjustable clamps 182 can be secured around various locations of the portable electronic device and connected to each other via the band 184, which can be connected to the connection strip 36. Elastic buffers 186 may be connected to each adjustable clamp 182 for an improved connection that prevents scratching to the portable electronic device. Bolts 183 may be located on the adjustable clamps 182 for further tightening the elastic buffers 186 against the portable electronic device. As shown in a bottom view of the fourth embodiment illustrated in Figure 13B, the band 184 may be a metal cable and a tightening arm 185 is connected to the band 184 and pivotally connected to the first jaw 14 or second jaw 16 so that as it pivots it tightens the band 184, whereafter it can be locked against the first jaw 14 or second jaw 16 until the cable needs to be released. Alternatively, the tightening arm 185 may include an opening 189 for receiving the rivet 38 on the connection strip 36.

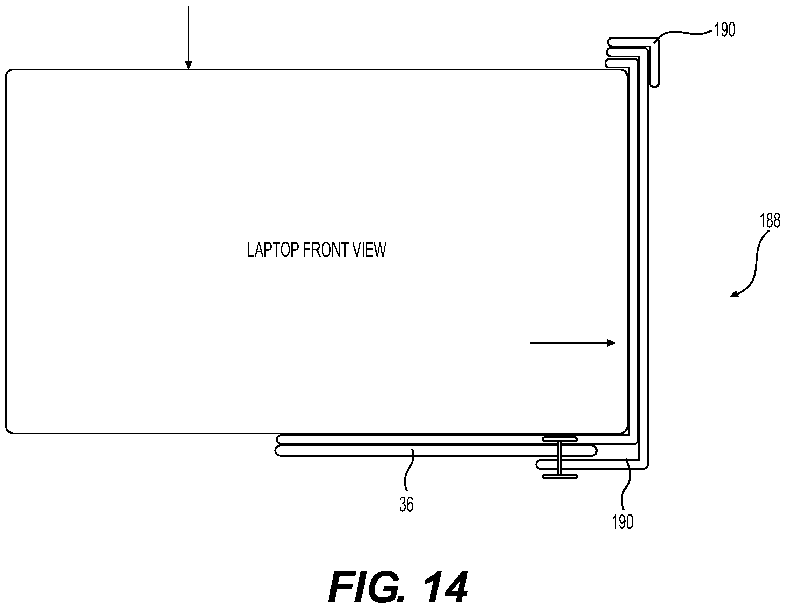

Figure 14 illustrates a fifth embodiment of the locking assembly 10, which may include all of the features provided in the previous embodiments. However, the fifth embodiment further includes a modified connection plate, i.e., a corner clamp 188, which includes a pair of corner jaws 190 for mounting to vertically offset corners of a laptop or other portable electronic devices. The clamp 188 may further include one of the previously described connection pins 54 to be located in the slot 50 of the connection strip 36. Alternatively, the corner clamp 188 may include the previously described pivot connector 38, e.g., rivet, for permanent connection to the connection strip 36.

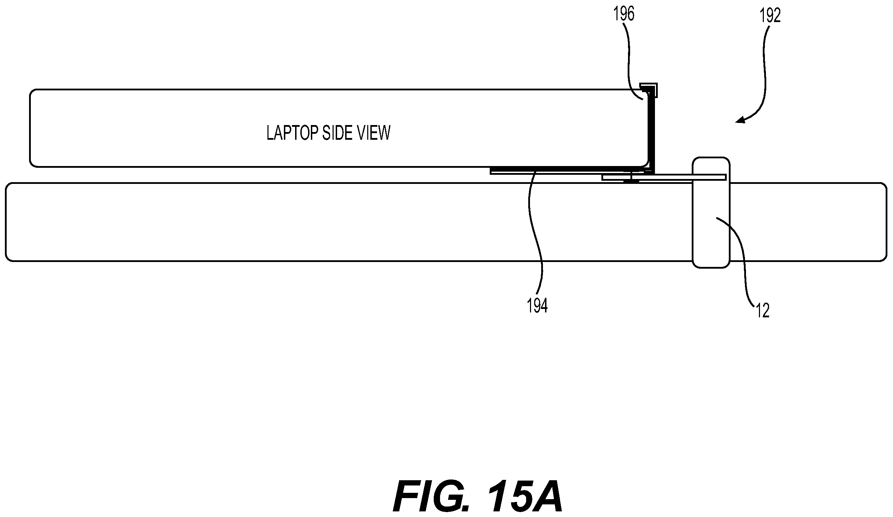

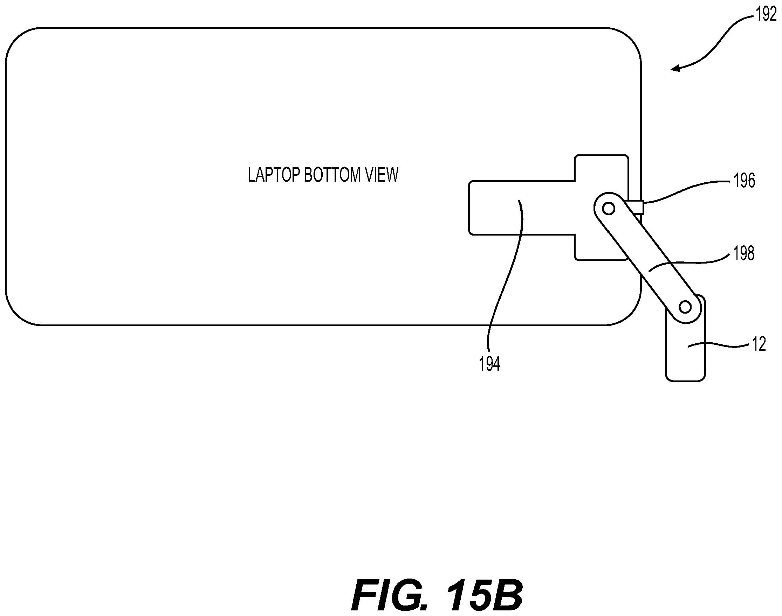

Figures 15A and 15B illustrate a sixth embodiment of the locking assembly 10, which may include all of the features provided in the previous embodiments. However, the sixth embodiment includes a smaller clamp assembly 12 and further includes a modified connection plate, i.e., a connection panel assembly 192, which includes a connection panel 194 for placement on the bottom of the portable electronic device that is pivotally connected to a side clamp 196 to clamp the panel 194 to the portable electronic device. A panel linkage 198 (best shown in Figure 15B) extends between and pivotally connects to the panel 194 and pivotally connects to the clamp assembly 12.

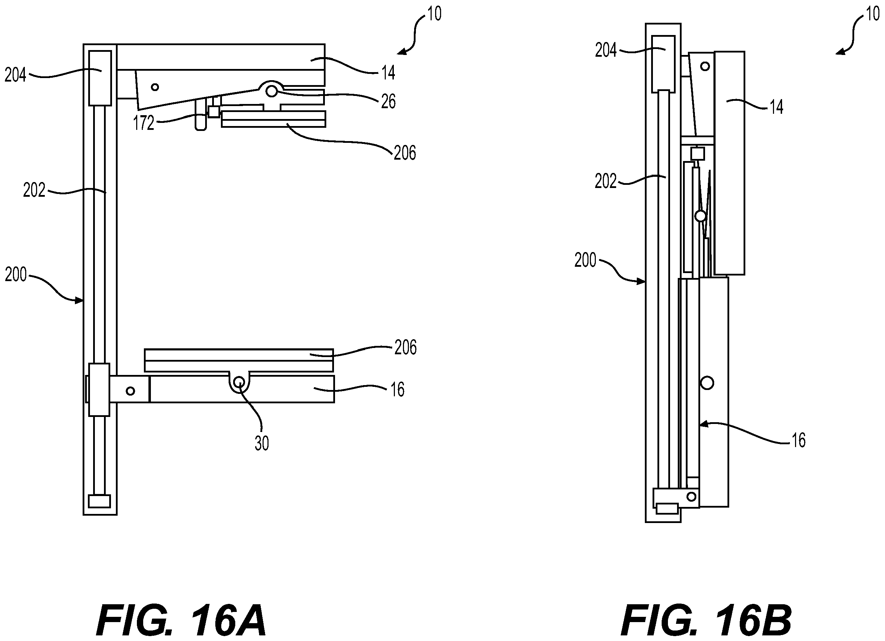

Figures 16A and 16B illustrate a seventh embodiment of the locking assembly 10, which may include all of the features provided in the previous embodiments. However, the seventh embodiment further includes a modified elongated bar, i.e., a motorized elongated bar 200, which includes a lead screw 202 and a lead screw motor 204 located adjacent to the first jaw 14 to drive the lead screw 202 to rotate. The second jaw 16 is connected to the lead screw 202 and moves during rotation of the lead screw 202. The first jaw 14 and second jaw 16 are both pivotally connected to the motorized elongated bar 200 so they can be pivoted against the motorized elongated bar 200 for easy transportation (as best shown in Figure 16B). As illustrated, the rotary-type detector 172 is located near the first jaw 14. In addition, the seventh embodiment includes a pair of rectangular pads 206 instead of the first pad 25 and second pad 28 for a larger contact area with the portable electronic device.

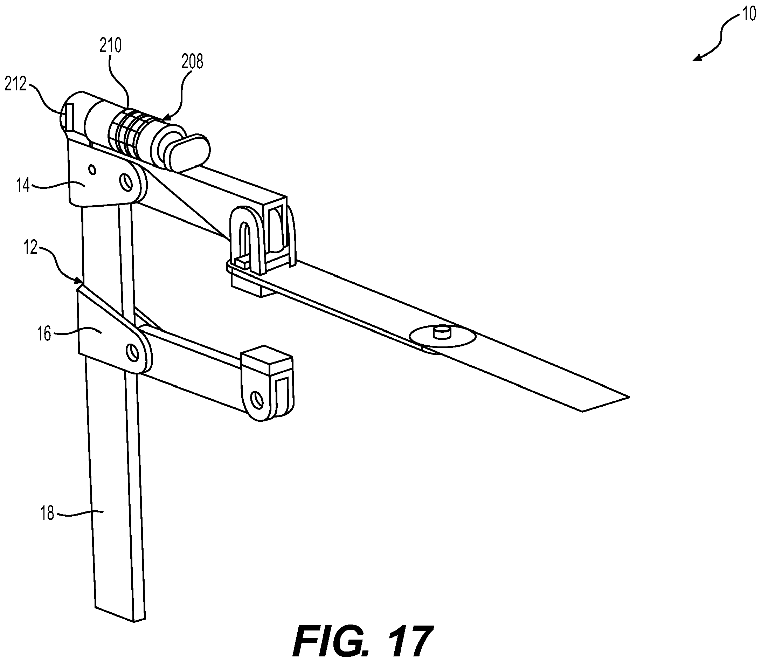

Figure 17 illustrates an eighth embodiment of the locking assembly 10, which may include all of the features provided in the previous embodiments. However, the eighth embodiment further includes a modified lock housing, i.e., a manual lock housing 208. Instead of the electronic components, the manual lock housing 208 includes a manual combination lock 210 and/or a keyway 212. More particularly, the manual lock housing 208 may include a dial-type lock that can be unlocked by aligning a series of dials into a pre-established combination. The manual lock housing 208 can thus be locked again by inserting a male portion (not shown) into the lock housing 208 and rotating the series of dials until they are no longer in the pre-established combination.

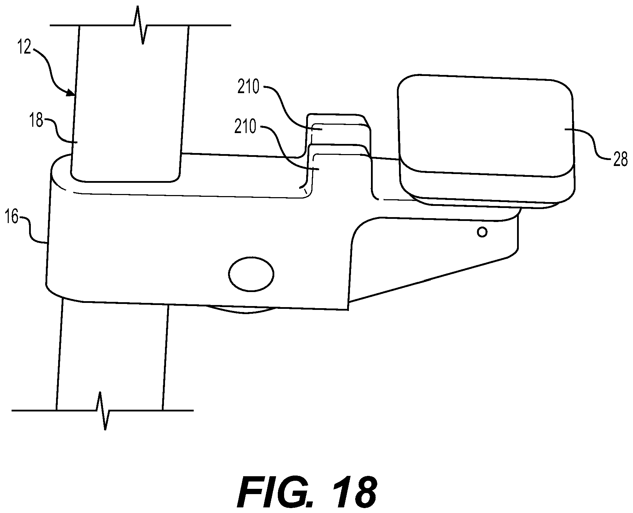

Figure 18 illustrates a ninth embodiment of the locking assembly 10, which may include all of the features provided in the previous embodiments. However, the ninth embodiment further includes a modified bottom jaw 16, i.e., a bottom jaw 16 that includes a pair of pins 210 configured to hold the cable 174 (Figure 11). More particularly, the cable 174 can loop around each of the pins 210 similar to how it was looped around respective second pads 28A, 28B in the second embodiment. Each pin 210 may be sized to extend the same or similar vertical distance of the second pad 28, such that the cable cannot be removed from pins 210 until the second jaw 16 has been loosened and spaced from the work surface.

It should be appreciated that the foregoing description of the embodiments has been provided for purposes of illustration. In other words, the subject disclosure it is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varies in many ways. Such variations are not to be regarded as a departure from the disclosure, and all such modifications are intended to be included within the scope of disclosure defined by the appended claims.

## Claims

1. A locking assembly (10) for locking a portable electronic device to a work surface, the locking assembly comprising:
a clamp assembly (12) including a bar (18) extending between a first end (20) and a second end (22) for placement adjacent to the work surface;
the clamp assembly (12) further including a first jaw (14) and a second jaw (16) extending outwardly from the bar (18) in spaced relationship to one another;
at least one of the first jaw (14) or the second jaw (16) moveable along the bar (18) between the first and second ends for clamping a work surface between the first and second jaws;
a locking mechanism (24) interchangeable from an unlocked condition to a locked condition for selectively locking the relative positioning between the first jaw (14) and the second jaw (16); **characterized by**
a first pad (25) connected to the first jaw (14);
a locking rod (72) located between the first jaw (14) and the first pad (25) and movable towards and into contact with the first pad during transition of the locking mechanism (24) from the unlocked condition to the locked condition and away from and out of contact with the first pad (25) during transition of the locking mechanism (24) from the locked condition to the unlocked condition;
a connector (32) including a first connector end (42) defining a bore for receiving the locking rod (72) therethrough during transition of the locking mechanism (24) from the unlocked condition to the locked condition to pivotally connect the connector (32) to the locking mechanism (24) about a first axis; and
the connector (32) extending from the first connector end (42) to a second connector end (44) for connection to a portable electronic device to secure the portable electronic device to the work surface in the locked condition of the locking mechanism (24).

2. The locking assembly (10) of Claim 1, wherein the second connector end (44) includes a second pivot connector for pivotally connecting the portable electronic device about a second axis.

3. The locking assembly (10) of Claim 2, wherein the connector (32) includes a connection strip (36) extending between the first connector end (42) and the second connector end (44), the connection strip (36) defining a flattened shape that is semi-rigid in directions perpendicular to the first and second axes and less rigid in directions parallel to the first and second axes.

4. The locking assembly (10) of Claim 2, wherein the first jaw (14) extends from the bar (18) to the first pad (25) extending towards and facing the second jaw (16) and the second jaw (16) extends from the bar (18) to a second pad (28) extending towards and facing the first pad (25), and wherein the first pad (25) connects to the first jaw (14) with a first pin (26) that permits pivotal movement of the first pad (25) and wherein the second pad (28) connects to the second jaw (16) with a second pin (30) that permits pivotal movement of the second pad (28).

5. The locking assembly (10) of Claim 1, wherein the first pad (25) further includes a back surface defining a depression for at least partially receiving the locking rod (72), and the locking mechanism (24) moves the locking rod (72) towards and away from the first pad (25).

6. The locking assembly (10) of Claim 5, wherein the first jaw (14) includes a seat (68) for at least partially receiving the locking mechanism (24) and the locking mechanism (24) is connected to the first jaw (14) by a linkage that permits the locking mechanism (24) to pivot into and out of the seat (68), wherein when the locking mechanism (24) is pivoted out of the seat (68) the locking rod (72) is moved out of contact with the first pad (25) and wherein when the locking mechanism (24) is pivoted into the seat (68) the locking rod (72) is moved into contact with the first pad (25).

7. The locking assembly (10) of Claim 6, wherein the locking mechanism (24) includes a bolt (94) that engages the first jaw (14) in a locked position, locking the locking mechanism (24) in the seat (68), and a lock tab (108) having a contact position that prevents the bolt (94) from disengaging the first jaw (14) in the locked position and wherein the lock tab (108) can be moved into a non-contact position to permit the bolt (94) to be disengaged from the first jaw (14) and pivoted.

8. The locking assembly (10) of Claim 7, wherein the locking mechanism (24) includes a lock assembly circuit (116) that includes a motor (120) for moving the lock tab (108) between the contact position and the non-contact position, and the lock assembly circuit (116) further includes
a controller (140) having a first user interface (134), a processor (144) and a memory device (146) with non-transitory storage for storing password data and containing instructions that, when executed by the processor, cause the processor (144) to:
cause the motor (120) to move the lock tab (108) to the non-contact position when a password input is received by the first user interface (134) that matches the password data.

9. The locking assembly (10) of Claim 8, wherein the lock assembly circuit (116) further includes:
an alarm circuit (138); and
the memory device (146) further containing instructions that, when executed by the processor, cause the processor (144) to:
initiate a sensory alarm in the alarm circuit (138) if no password input has been received by the first user interface (134) and at least one of the locking mechanism (24), the connector (32), or the first pad (25) has been moved beyond a predetermined threshold.

10. The locking assembly (10) of Claim 1, wherein the first jaw (14) and second jaw (16) can be folded into a position substantially parallel to the bar (18).

11. The locking assembly (10) of Claim 1, wherein the connector (32) includes a connection plate (34) connected to the provided portable electronic device with one of adhesive or double-sided tape and wherein the connection plate (34) is further connected to a connection strip (36) with a rivet (38) that permits pivotal movement between the connection strip (36) and the connection plate (34).

12. The locking assembly (10) of Claim 1, further including a lead screw (202) located in the bar (18) and a lead screw motor (204) for rotating the lead screw (202), wherein rotation of the lead screw (202) by the lead screw motor (204) moves at least one of the first jaw (14) and the second jaw (16).

13. The locking assembly (10) of Claim 11, wherein the rivet (38) is disposed at a center of the connection plate (34).

14. The locking assembly (10) of Claim 11, further comprising a primer layer disposed between the adhesive or double-sided tape and the portable electronic device for increasing a bond strength between the portable electronic device and the connection plate (34).

15. The locking assembly (10) of Claim 4, wherein the first and second pins (26, 30) are rotatable relative to the respective first or second jaws (14, 16) for providing pivotable and rotational movement of the first and second pads (25, 28).

## Patentansprüche

1. Verriegelungsanordnung (10) zum Verriegeln eines tragbaren elektronischen Geräts an einer Arbeitsfläche, wobei die Verriegelungsanordnung umfasst:
eine Klemmanordnung (12), die eine Stange (18) enthält, die sich zwischen einem ersten Ende (20) und einem zweiten Ende (22) erstreckt, um angrenzend an die Arbeitsfläche angeordnet zu sein;
wobei die Klemmanordnung (12) ferner eine erste Klemmbacke (14) und eine zweite Klemmbacke (16) enthält, die sich von der Stange (18) in einem beabstandeten Verhältnis zueinander nach außen erstrecken;
wenigstens eine von der ersten Klemmbacke (14) oder der zweiten Klemmbacke (16), die entlang der Stange (18) zwischen dem ersten und dem zweiten Ende beweglich ist, um eine Arbeitsfläche zwischen der ersten und der zweiten Klemmbacke einzuklemmen;
einen Verriegelungsmechanismus (24), der von einem entriegelten Zustand in einen verriegelten Zustand umschaltbar ist, um die relative Positionierung zwischen der ersten Klemmbacke (14) und der zweiten Klemmbacke (16) selektiv zu verriegeln; **gekennzeichnet durch**
ein erstes Pad (25), das mit der ersten Klemmbacke (14) verbunden ist;
eine Verriegelungsstange (72), die sich zwischen der ersten Klemmbacke (14) und dem ersten Pad (25) befindet und während des Übergangs des Verriegelungsmechanismus (24) von dem entriegelten Zustand in den verriegelten Zustand in Richtung des ersten Pads und in Kontakt mit diesem und während des Übergangs des Verriegelungsmechanismus (24) von dem verriegelten Zustand in den entriegelten Zustand von dem ersten Pad (25) weg und aus dem Kontakt mit diesem bewegbar ist;
einen Verbinder (32), der ein erstes Verbinderende (42) enthält, das eine Bohrung dort hindurch zur Aufnahme der Verriegelungsstange (72) während des Übergangs des Verriegelungsmechanismus (24) von dem entriegelten Zustand in den verriegelten Zustand definiert, um den Verbinder (32) mit dem Verriegelungsmechanismus (24) um eine erste Achse schwenkbar zu verbinden; und
der Verbinder (32) sich von dem ersten Verbinderende (42) zu einem zweiten Verbinderende (44) zur Verbindung mit einem tragbaren elektronischen Gerät erstreckt, um das tragbare elektronische Gerät an der Arbeitsfläche in dem verriegelten Zustand des Verriegelungsmechanismus (24) zu befestigen.

2. Verriegelungsanordnung (10) gemäß Anspruch 1, wobei das zweite Verbinderende (44) einen zweiten Schwenkverbinder zum schwenkbaren Verbinden des tragbaren elektronischen Geräts um eine zweite Achse enthält.

3. Verriegelungsanordnung (10) gemäß Anspruch 2, wobei der Verbinder (32) einen Verbindungsstreifen (36) enthält, der sich zwischen dem ersten Verbinderende (42) und dem zweiten Verbinderende (44) erstreckt, wobei der Verbindungsstreifen (36) eine abgeflachte Form definiert, die in Richtungen senkrecht zu der ersten und zweiten Achse halbsteif ist und in Richtungen parallel zu der ersten und zweiten Achse weniger steif ist.

4. Verriegelungsanordnung (10) gemäß Anspruch 2, wobei sich die erste Klemmbacke (14) von der Stange (18) zu dem ersten Pad (25) erstreckt, das sich in Richtung der zweiten Klemmbacke (16) erstreckt und dieser zugewandt ist, und die zweite Klemmbacke (16) sich von der Stange (18) zu einem zweiten Pad (28) erstreckt, das sich in Richtung des ersten Pads (25) erstreckt und diesem zugewandt ist, und wobei das erste Pad (25) mit der ersten Klemmbacke (14) mit einem ersten Stift (26) verbunden ist, der eine Schwenkbewegung des ersten Pads (25) ermöglicht, und wobei das zweite Pad (28) mit der zweiten Klemmbacke (16) mit einem zweiten Stift (30) verbunden ist, der eine Schwenkbewegung des zweiten Pads (28) ermöglicht.

5. Verriegelungsanordnung (10) gemäß Anspruch 1, wobei das erste Pad (25) ferner eine Rückfläche enthält, die eine Vertiefung zur wenigstens teilweisen Aufnahme der Verriegelungsstange (72) definiert, und der Verriegelungsmechanismus (24) die Verriegelungsstange (72) in Richtung des ersten Pads (25) und von diesem weg bewegt.

6. Verriegelungsanordnung (10) gemäß Anspruch 5, wobei die erste Klemmbacke (14) einen Sitz (68) zur wenigstens teilweisen Aufnahme des Verriegelungsmechanismus (24) enthält und der Verriegelungsmechanismus (24) mit der ersten Klemmbacke (14) durch ein Gestänge verbunden ist, das es dem Verriegelungsmechanismus (24) ermöglicht, in den Sitz (68) hinein- und aus diesem heraus zu schwenken, wobei, wenn der Verriegelungsmechanismus (24) aus dem Sitz (68) herausgeschwenkt wird, die Verriegelungsstange (72) aus dem Kontakt mit dem ersten Pad (25) bewegt wird, und wobei, wenn der Verriegelungsmechanismus (24) in den Sitz (68) geschwenkt wird, die Verriegelungsstange (72) in Kontakt mit dem ersten Pad (25) bewegt wird.

7. Verriegelungsanordnung (10) gemäß Anspruch 6, wobei der Verriegelungsmechanismus (24) einen Bolzen (94), der in einer verriegelten Position mit der ersten Klemmbacke (14) eingreift und den Verriegelungsmechanismus (24) in dem Sitz (68) verriegelt, und eine Verriegelungslasche (108) mit einer Kontaktposition enthält, die verhindert, dass der Bolzen (94) in der verriegelten Position mit der ersten Klemmbacke (14) sich löst, und wobei die Verriegelungslasche (108) in eine kontaktlose Position bewegt werden kann, um es dem Bolzen (94) zu erlauben, dass er von der ersten Klemmbacke (14) gelöst und geschwenkt werden kann.

8. Verriegelungsanordnung (10) gemäß Anspruch 7, wobei der Verriegelungsmechanismus (24) eine Verriegelungsanordnungsschaltung (116) enthält, die einen Motor (120) zum Bewegen der Verriegelungslasche (108) zwischen der Kontaktposition und der kontaktlosen Position enthält, und die Verriegelungsanordnungsschaltung (116) ferner enthält
einen Controller (140) mit einer ersten Benutzerschnittstelle (134), einem Prozessor (144) und ein Speichergerät (146) mit einem nicht-übertragbaren Speicher zum Speichern von Passwortdaten und Anweisungen enthält, die, wenn sie von dem Prozessor ausgeführt werden, den Prozessor (144) veranlassen, um:
den Motor (120) zu veranlassen, die Verriegelungslasche (108) in die kontaktlose Position zu bewegen, wenn eine Passworteingabe von der ersten Benutzerschnittstelle (134) empfangen wird, die mit den Passwortdaten übereinstimmt.

9. Verriegelungsanordnung (10) gemäß Anspruch 8, wobei die Verriegelungsanordnungsschaltung (116) ferner enthält:
eine Alarmschaltung (138); und
das Speichergerät (146) ferner Anweisungen enthält, die, wenn sie von dem Prozessor ausgeführt werden, den Prozessor (144) veranlassen, um:
einen sensorischen Alarm in der Alarmschaltung (138) auszulösen, wenn keine Passworteingabe von der ersten Benutzerschnittstelle (134) empfangen wurde und wenigstens eines von dem Verriegelungsmechanismus (24), dem Verbinder (32) oder dem ersten Pad (25) über einen vorbestimmten Schwellenwert hinaus bewegt wurde.

10. Verriegelungsanordnung (10) gemäß Anspruch 1, wobei die erste Klemmbacke (14) und die zweite Klemmbacke (16) in eine Position geklappt werden können, die im Wesentlichen parallel zu der Stange (18) verläuft.

11. Verriegelungsanordnung (10) gemäß Anspruch 1, wobei der Verbinder (32) eine Verbindungsplatte (34) enthält, die mit dem bereitgestellten tragbaren elektronischen Gerät mit einem von einem Klebstoff oder doppelseitigen Klebeband verbunden ist, und wobei die Verbindungsplatte (34) ferner mit einem Verbindungsstreifen (36) mit einer Niete (38) verbunden ist, die eine Schwenkbewegung zwischen dem Verbindungsstreifen (36) und der Verbindungsplatte (34) ermöglicht.

12. Verriegelungsanordnung (10) gemäß Anspruch 1, die ferner eine Leitspindel (202), die sich in der Stange (18) befindet und einen Leitspindelmotor (204) zum Drehen der Leitspindel (202) enthält, wobei die Drehung der Leitspindel (202) durch den Leitspindelmotor (204) wenigstens eine von der ersten Klemmbacke (14) und der zweiten Klemmbacke (16) bewegt.

13. Verriegelungsanordnung (10) gemäß Anspruch 11, wobei die Niete (38) sich in einer Mitte der Verbindungsplatte (34) befindet.

14. Verriegelungsanordnung (10) gemäß Anspruch 11, die ferner eine Primerschicht umfasst, die zwischen dem Klebstoff oder doppelseitigen Klebeband und dem tragbaren elektronischen Gerät angebracht ist, um die Haftfestigkeit zwischen dem tragbaren elektronischen Gerät und der Verbindungsplatte (34) zu erhöhen.

15. Verriegelungsanordnung (10) gemäß Anspruch 4, wobei die ersten und zweiten Stifte (26, 30) relativ zu den jeweiligen ersten oder zweiten Klemmbacken (14, 16) drehbar sind, um eine Schwenk- und Drehbewegung der ersten und zweiten Pads (25, 28) zu ermöglichen.

## Revendications

1. Ensemble de verrouillage (10) conçu pour verrouiller un dispositif électronique portable sur une surface de travail, l'ensemble de verrouillage comprenant :
un ensemble de serrage (12) comprenant une barre (18) s'étendant entre une première extrémité (20) et une seconde extrémité (22) pour un placement adjacent à la surface de travail ;
l'ensemble de serrage (12) comprenant en outre une première mâchoire (14) et une seconde mâchoire (16) s'étendant vers l'extérieur à partir de la barre (18) en relation espacée l'une de l'autre ;
au moins l'une parmi la première mâchoire (14) ou la seconde mâchoire (16) mobile le long de la barre (18) entre les première et seconde extrémités pour serrer une surface de travail entre les première et seconde mâchoires ;
un mécanisme de verrouillage (24) interchangeable d'un état déverrouillé à un état verrouillé pour verrouiller sélectivement le positionnement relatif entre la première mâchoire (14) et la seconde mâchoire (16) 2.
**caractérisé par** :
un premier patin (25) relié à la première mâchoire (14) ;
une tige de verrouillage (72) placée entre la première mâchoire (14) et le premier patin (25) et mobile vers et en contact avec le premier patin pendant la transition du mécanisme de verrouillage (24) de l'état déverrouillé à l'état verrouillé, et à distance de et hors de contact avec le premier patin (25) pendant la transition du mécanisme de verrouillage (24) de l'état verrouillé à l'état déverrouillé ;
un connecteur (32) comprenant une première extrémité de connecteur (42) définissant un alésage pour recevoir la tige de verrouillage (72) qui la traverse pendant la transition du mécanisme de verrouillage (24) de l'état déverrouillé à l'état verrouillé pour connecter de manière pivotante le connecteur (32) au mécanisme de verrouillage (24) autour d'un premier axe ; et
le connecteur (32) s'étendant de la première extrémité de connecteur (42) à une seconde extrémité de connecteur (44) pour un raccordement à un dispositif électronique portable afin de fixer le dispositif électronique portable à la surface de travail dans l'état verrouillé du mécanisme de verrouillage (24).

2. Ensemble de verrouillage (10) selon la revendication 1, dans lequel la seconde extrémité de connecteur (44) comprend un second connecteur pivotant pour connecter de manière pivotante le dispositif électronique portable autour d'un second axe.

3. Ensemble de verrouillage (10) selon la revendication 2, dans lequel le connecteur (32) comprend une bande de connexion (36) s'étendant entre la première extrémité de connecteur (42) et la seconde extrémité de connecteur (44), la bande de connexion (36) définissant une forme aplatie qui est semi-rigide dans des directions perpendiculaires aux premier et second axes et moins rigide dans des directions parallèles aux premier et second axes.

4. Ensemble de verrouillage (10) selon la revendication 2, dans lequel la première mâchoire (14) s'étend depuis la barre (18) jusqu'au premier patin (25) s'étendant vers et faisant face à la seconde mâchoire (16) et la seconde mâchoire (16) s'étend depuis la barre (18) jusqu'à un second patin (28) s'étendant vers et faisant face au premier patin (25), et dans lequel le premier patin (25) se connecte à la première mâchoire (14) avec une première broche (26) qui permet un mouvement de pivotement) du premier patin (25) et dans lequel le second patin (28) se connecte à la seconde mâchoire (16) avec une seconde broche (30) qui permet un mouvement de pivotement du second patin (28).

5. Ensemble de verrouillage (10) selon la revendication 1, dans lequel le premier patin (25) comprend une surface arrière définissant une dépression pour recevoir au moins partiellement la tige de verrouillage (72), et le mécanisme de verrouillage (24) déplace la tige de verrouillage (72) vers et à l'écart du premier patin (25) .

6. Ensemble de verrouillage (10) selon la revendication 5, dans lequel la première mâchoire (14) comprend un siège (68) pour recevoir au moins partiellement le mécanisme d'enclenchement (24) et le mécanisme d'enclenchement (24) est relié à la première mâchoire (14) par une liaison qui permet au mécanisme de verrouillage (24) de pivoter dans et hors du siège (68), dans lequel lorsque le mécanisme de verrouillage (24) pivote hors du siège (68), la tige de verrouillage (72) est déplacée hors de contact avec le premier patin (25) et dans lequel lorsque le mécanisme d'enclenchement (24) pivote dans le siège (68), la tige de verrouillage (72) est déplacée en contact avec le premier patin (25).

7. Ensemble de verrouillage (10) selon la revendication 6, dans lequel le mécanisme de verrouillage (24) comprend un embout (94) qui engage la première mâchoire (14) dans une position verrouillée, emboîtant le mécanisme de verrouillage (24) dans le siège (68), et une languette de verrouillage (108) ayant une position de contact qui empêche l'embout (94) de désengager la première mâchoire (14) dans la position verrouillée et dans lequel la languette de verrouillage (108) peut être déplacée dans une position sans contact pour permettre à l'embout (94) d'être désengagé de la première mâchoire (14) et pivoté.

8. Ensemble de verrouillage (10) selon la revendication 7, dans lequel le mécanisme de verrouillage (24) comprend un circuit d'ensemble de verrouillage (116) qui comprend un moteur (120) pour déplacer la languette de verrouillage (108) entre la position de contact et la position sans contact, et le circuit d'ensemble de verrouillage (116) comprend en outre
un contrôleur (140) ayant une première interface utilisateur (134), un processeur (144) et un dispositif de mémoire (146) avec une mémoire non transitoire pour stocker des données de mot de passe et contenant des instructions qui, lorsqu'elles sont exécutées par le processeur, amènent le processeur (144) à :
actionner le moteur (120) pour déplacer la languette de verrouillage (108) vers la position sans contact lorsqu'une entrée de mot de passe est reçue par la première interface utilisateur (134) qui correspond aux données de mot de passe.

9. Ensemble de verrouillage (10) selon la revendication 8, dans lequel le circuit d'ensemble de verrouillage (116) comprend en outre :
un circuit d'alarme (138) ; et le dispositif de mémoire (146) contenant en outre des instructions qui, lorsqu'elles sont exécutées par le processeur, amènent le processeur (144) à :
déclencher une alarme sensorielle dans le circuit d'alarme (138) si aucune entrée de mot de passe n'a été reçue par la première interface utilisateur (134) et qu'au moins l'un du mécanisme de verrouillage (24), du connecteur (32) ou du premier bloc (25) a été déplacé au-delà d'un seuil prédéterminé.

10. Ensemble de verrouillage (10) selon la revendication 1, dans lequel la première mâchoire (14) et la seconde mâchoire (16) peuvent être pliées dans une position sensiblement parallèle à la barre (18).

11. Ensemble de verrouillage (10) selon la revendication 1, dans lequel le connecteur (32) comprend une plaque de connexion (34) connectée au dispositif électronique portable fourni avec un adhésif ou une bande double face et dans lequel la plaque de connexion (34) est en outre connectée à une bande de connexion (36) avec un rivet (38) qui permet un mouvement pivotant entre la bande de connexion (36) et la plaque de connexion (34).

12. Ensemble de verrouillage (10) selon la revendication 1, comprenant en outre une vis-mère (202) située dans la barre (18) et un moteur de vis-mère (204) pour faire tourner la vis-mère (202), dans lequel la rotation de la vis-mère (202) par le moteur de vis-mère (204) déplace au moins l'une de la première mâchoire (14) et de la seconde mâchoire (16).

13. Ensemble de verrouillage (10) selon la revendication 11, dans lequel le rivet (38) est disposé au centre de la plaque de connexion (34).

14. Ensemble de verrouillage (10) selon la revendication 11, comprenant en outre une couche d'apprêt disposée entre l'adhésif ou la bande double face et le dispositif électronique portable pour augmenter une résistance de liaison entre le dispositif électronique portable et la plaque de connexion (34).

15. Ensemble de verrouillage (10) selon la revendication 4, dans lequel les première et seconde broches (26, 30) sont rotatives par rapport aux première ou seconde mâchoires respectives (14, 16) pour permettre un mouvement pivotant et rotatif des premier et second patins (25, 28).
